# EUROPEAN PATENT SPECIFICATION

(11) **EP 1 776 277 B1**
(45) Date of publication and mention of the grant of the patent: **05.03.2008**
(21) Application number: 04739628.8
(22) Date of filing: 04.06.2004
(51) Int. Cl.: B65B 51/30

(54) **MACHINE FOR PACKING SMALL-SIZED PRODUCTS INSIDE FLAT-BOTTOMED BAGS**
MASCHINE ZUM VERPACKEN VON KLEINFORMATIGEN PRODUKTEN IN BEUTELN MIT FLACHEM BODEN
MACHINE A RANGER DES PRODUITS DE PETITE TAILLE DANS DES SACS A FOND PLAT

(43) Date of publication of application: 25.04.2007
(73) Proprietor: Altopack S.P.A., 55011 Altopascio (LU) (IT)
(72) Inventor: Vezzani, Paolo, 55012 Capannori (IT)
(74) Representative: Mittler, Enrico
(86) International application number: PCT/EP2004/006081
(87) International publication number: WO 2005/118404

(56) References cited:
- EP-A- 1 167 191
- US-A- 4 079 662
- US-A- 4 365 459
- US-A- 5 398 486

## Description

The present invention refers to a machine for packing small-sized products inside flat-bottomed bags.

Packing machines are known, used in particular in the food sector, that enclose various small-sized products, such as short pasta, beans, chick peas and so on in a wrapping of flexible, transparent plastic material, usually polypropylene.

These machines basically provide for a pair of heat sealing pincers with cutting blade, that carry out a D type movement along the descent path of a tubular wrapping in plastic flexible material so as to periodically move closer to each other and to the tubular wrapping to carry out double sealing along two parallel horizontal lines and a cutting of the wrapping itself between said lines, accompanying the descent of said wrapping for the time needed to carry out the above-mentioned operations. In the time that passes between a double sealing and the successive one, the product to be packed is gravity fed inside the bag being formed.

It is also known that for an optimal presentation of the packs of pasta on the shop shelves it is advisable that the bags have a flat bottom, which with the current machines presents various difficulties.

Two types of machines for packing small-sized products inside plat-bottomed bags are well disclosed in US-4079662 (corresponding to the preamble of claim 1) and US-5398486.

The object of the present invention is now that of producing a packing machine for small-sized products, by means of which flat-bottomed bag packs can be obtained.

In accordance with the invention, this object is achieved with a machine as disclosed in claim 1.

Thus bag packs are produced in which, immediately above the lower sealing, two pockets or side recesses are present that permit the formation of a flat bottom suitable for the pack to be placed steadily on a shelf or on the shelf of a piece of furniture.

An embodiment of the present invention is illustrated as non-limiting example in the enclosed drawings, in which:
Figure 1 shows a machine according to the present invention in a frontal view with heat sealing pincers in a closed position;
Figure 2 shows a similar view to that of Figure 1 with a frontal part removed to show parts that otherwise would be hidden of the above-mentioned machine;
Figure 3 shows the plan of the same machine from above in the work position of Figure 1;
Figure 4 shows a plan of an enlarged view from above of the sealing and cutting group comprised in the machine of the previous figures;
Figure 5 shows the above-mentioned group in section according to line V-V of Figure 4;
Figure 6 shows the above-mentioned group in section according to line VI-VI of Figure 4;
Figure 7 shows the above-mentioned group in section according to line VII-VII of Figure 4;
Figure 8 shows again the above-mentioned group in section according to line VIII-VIII of Figure 2 with pincers slightly farther away from each other;
Figure 9 shows the above-mentioned machine seen from the left in relation to Figure 1;
Figures 10 - 14 show views from the side similar to that of Figure 8 in different operative phases of the machine illustrated in the drawings;
Figure 15 shows a plan view similar to that of Figure 3 in the operative phase of Figure 14;
Figure 16 shows a view from the side of the machine in the final sealing and cutting phase.

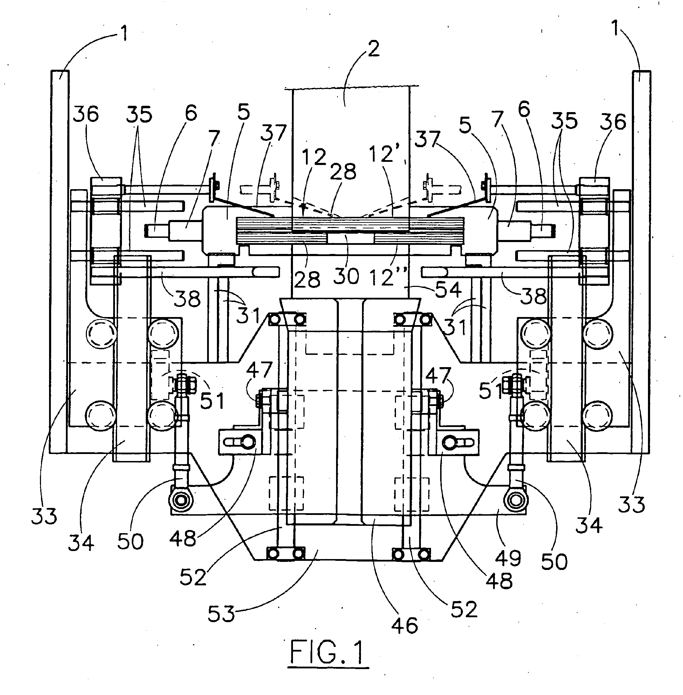

In Figures 1-3 and 9, 1 indicates a fixed framework that supports the operative parts of the machine shown in the drawings. Instead 2 indicates a continuous tubular wrapping that descends vertically from above downward looking at Figure 1 and which the above-mentioned machines subdivides into single flat-bottomed bags.

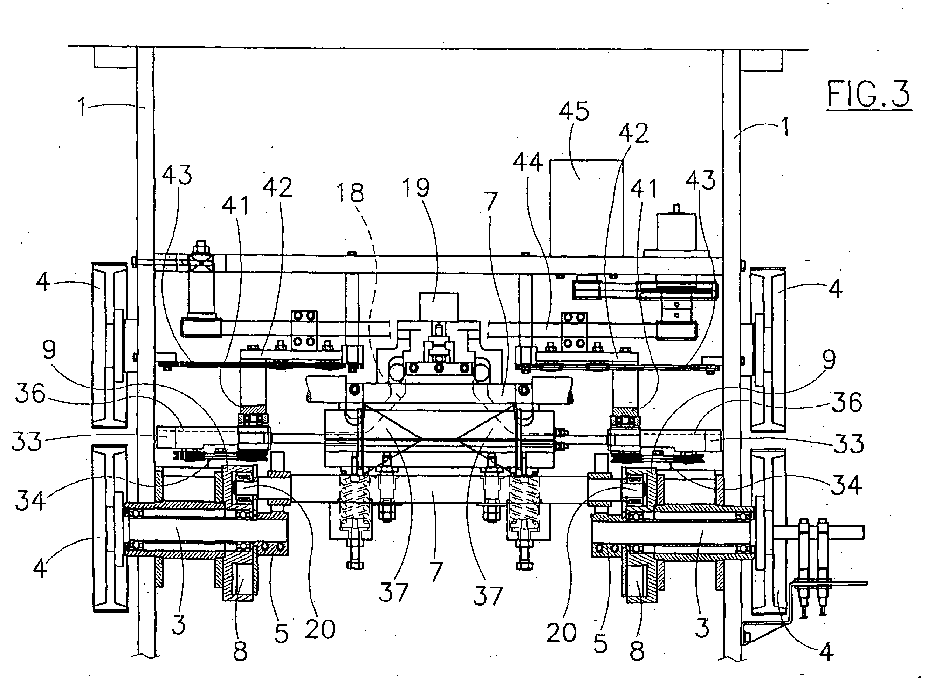

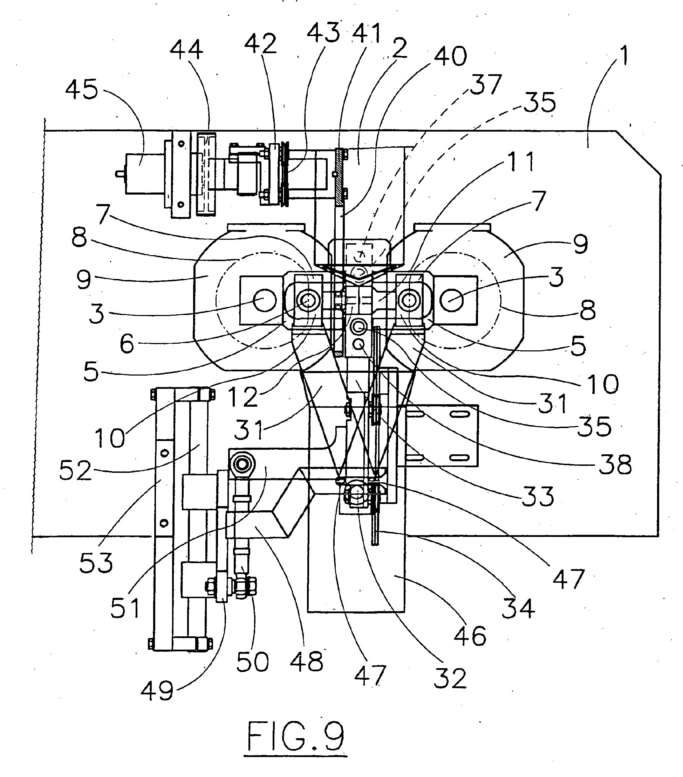

The framework 1 supports two pairs of horizontal shafts 3 so that they can be rotated, aligned two by two and parallel two by two (only two shown in fig. 3), that are made to rotate continuously by respective driving pulleys 4 (Figure 3). Respective brackets 5 are splined onto shafts 3, on which are hinged the respective circular-sectioned ends 6 of two parallel horizontal shafts 7 with rectangular section (Figures 1, 3 and 9). The above-mentioned ends 6 are inserted so that they can slide and rotate in respective tracks 8 of cams 9 (Figures 3 and 9), which, as represented with the respective median axes in Fig. 9, have an entirely circular shape except for a straight section 10 facing the corresponding straight section of the cam adjacent to the side.

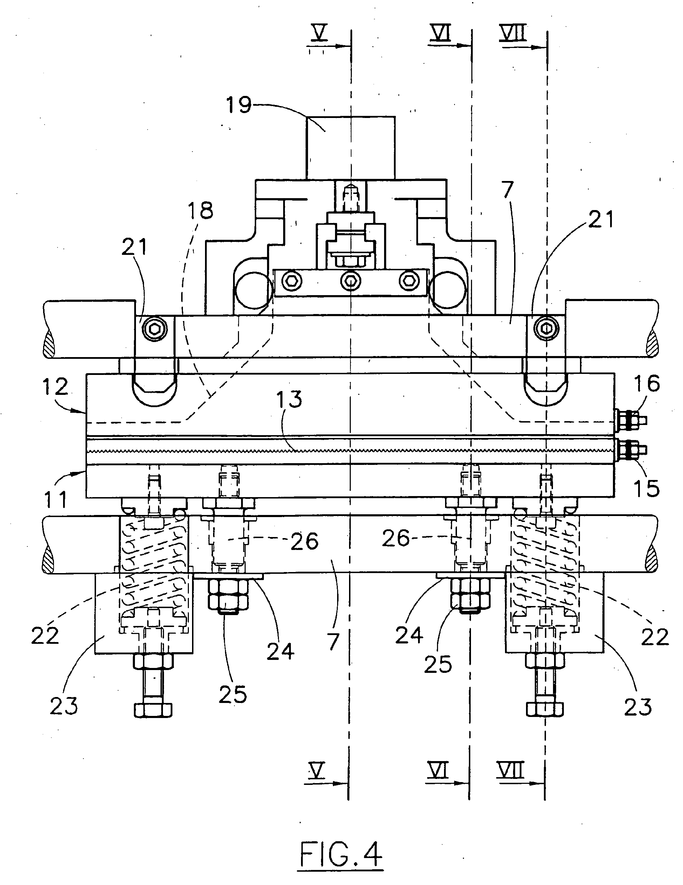

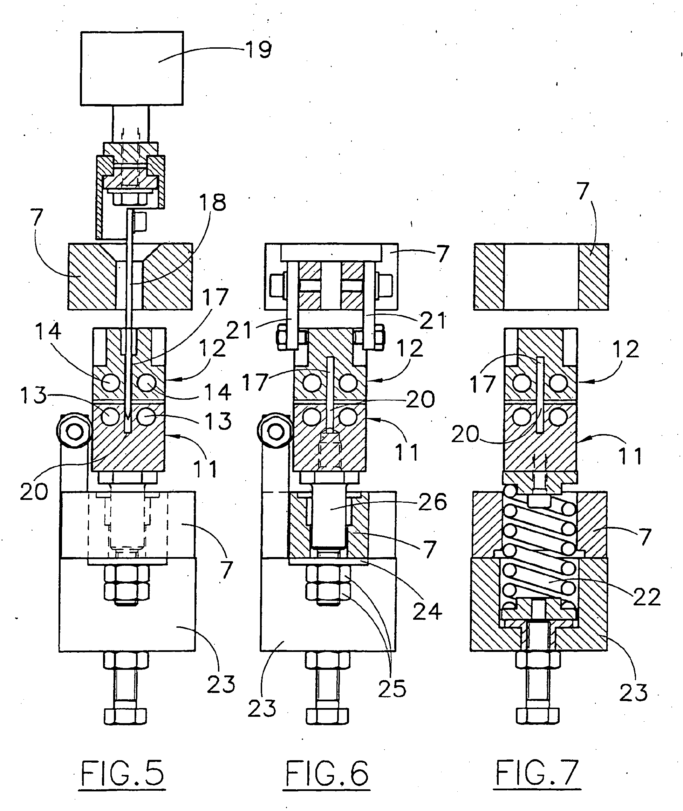

The two shafts 7 with rectangular section act as support for front heat sealing pincers 11 and rear heat sealing pincers 12 (Figures 1 and 3-8) heated with internal electrical resistances 13 and 14 fitted with electrical power supplies 15 and 16 (Fig. 4). Each pincer 11, 12 is composed of an upper portion 11', 12' and of a lower portion 11", 12" (Figures 1, 2 and 5-8) separated, in relation to the rear pincer 12, by a groove 17 in which a cutting blade 18 can slide commanded by a pneumatic cylinder 19 and, in relation to the front pincer 11, by, a facing groove 20 suitable for containing the blade 18 when it is made to advance by the cylinder 19. Two clamps 21 (Figures 3 and 6) secure the rear pincer 12 rigidly to the relative shaft 7, while the front pincer 11 is constrained to the relative shaft 7 so that it can spring thanks to adjustable springs 22 that react against blocks 23 secured to the shaft 7 (Figures 4 and 7) and repel the front pincer towards a definite position by washers 24 secured with nuts 25 to sliding tangs 26 of the same front pincer 11 (Figures 4 and 6).

As shown in Figures 1, 2 and 8, the two pincers 11 and 12 are fitted with teeth 27 and 28 that are developed horizontally, which are vertically staggered so as to penetrate each other when the two pincers brought to engage mutually for the head and bottom sealing of the bottom of the bags. However, while the teeth of the upper portions 11' and 12' develop along the entire width of the pincers, those of the lower portions 11" and 12" present central interruptions 29 and 30. In this manner, while the upper portions 11' and 12' perform sealings and, thus, complete closing of the bottom of the bag, the lower portions 11" and 12" leave a central opening on the top of the bag which, in a successive phase of the packing operation, enables the vacuum inside the bag to be made before it is finally closed.

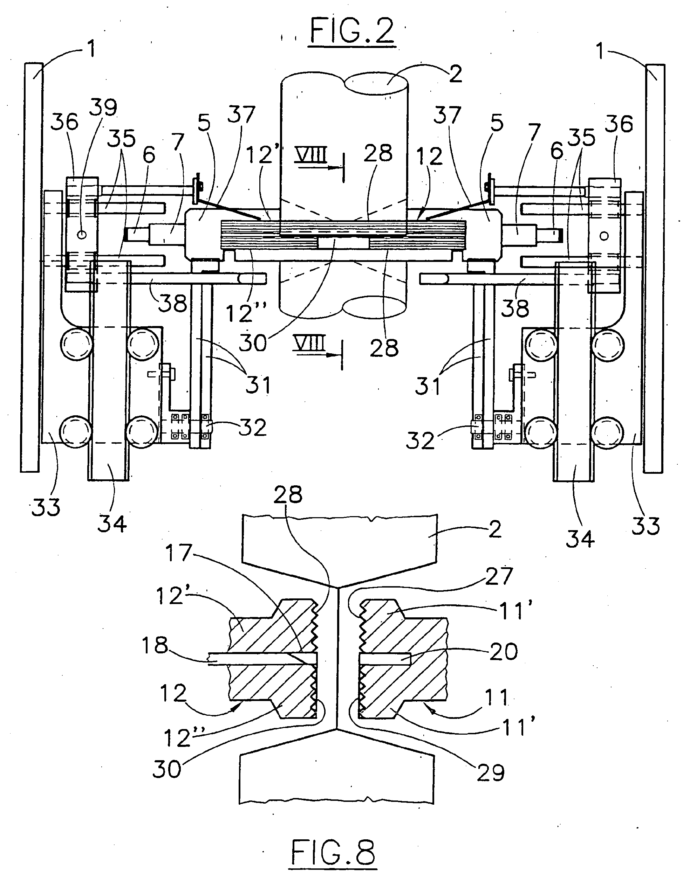

As shown in Figures 2 and 9, the two shafts 7 are connected rigidly to two couples of rods 31 that converge in respective mutual hinging pins 32 secured to lower trolleys 33 vertically mobile along guides 34. Each trolley 33 carries above a pair of horizontal guide rods 35 (Figures 1, 2 and 9), along which a support 36 can slide for a pair of lances 37 and 38 (Figure 3) that can be brought closer and farther away in relation to the corresponding lances held by the support 36 carried by the other trolley 33. During the vertical movements of the trolleys 33 the supports 36 are kept in the correct vertical-orientation-by-pins 39 housed so that they can slide in vertical slots 40 of flat brackets 41, each of which is secured to a respective upper trolley 42 (Figures 3 and 9) that can be moved horizontally along a guide 43 under the command of a belt 44 commanded by an electric motor 45 suitably synchronised with that which commands the rotation of the pulleys 4 and thus the motion of the pincers 11 and 12.

Finally, below the bag sealing and cutting zone, a tubular conveyor 46 is provided for whose task is to guide towards a collection area placed below (not shown) the bags that have already been formed that detach from the tubular wrapping 2 after the sealing carried out by the pincers 11, 12 and the cutting carried out by the blade 18. The tubular conveyor 46 is secured by means of screws 47 to a pair of arms 48, which in turn are secured so that they can be regulated to a support trolley 49 (Figures 1 and 9), that is connected by connecting rods 50 to arms 51 of the trolley 33 and can slide along vertical guides 52 secured to a support 53 which in turn is secured to the framework 1.

By effect of the above-described structure the machine shown in the drawings operates as follows.

In the completely closed position illustrated in Figures 1, 3 and-9 the two pincers 11 and 12 carry out with their upper portions 11' and 12' the complete sealing of opposite flaps of the tubular wrapping 2 for forming the completely closed bottom of the successive bag, while the lower portions 11" and 12" of the same pincers, by effect of their central portions 29 and 30 without teeth, carry out a partial sealing of below portions of said opposite flaps of the tubular wrapping 2 for the formation of the partially closed top of the bag 54 whose bottom has been previously formed. The blade 18 cuts the film between the two sealings, both carried out in parallel horizontal lines by effect of the co-penetration of the teeth 27 and 28, and the bag below can fall onto the below conveyor 46, which in that moment is in a suitably raised position (Figures 1 and 9).

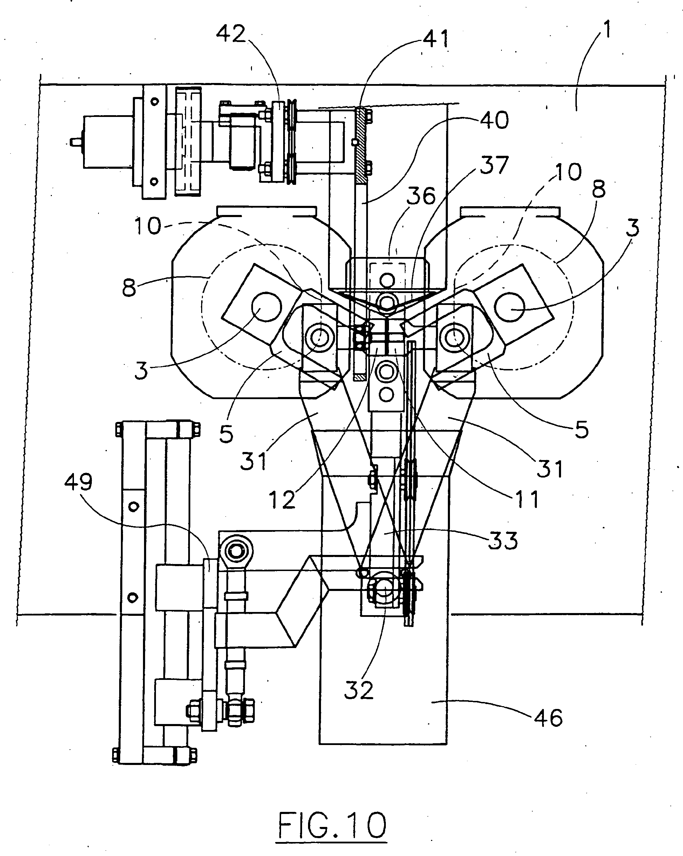

The rotation of the shafts 3 combined with the engagement of the ends 6 of the shafts 7 in the straight sections 10 of the tracks 8 of the cams 9 obliges the pincers 11 and 12 to accompany the descent of the tubular wrapping 2, thus permitting the sealing operation to be completed (Figure 10). At the same time the trolleys 33 are lowered carrying with them the supports 36 with the lances 37 and 38 and the trolley 49 with the conveyor 46.

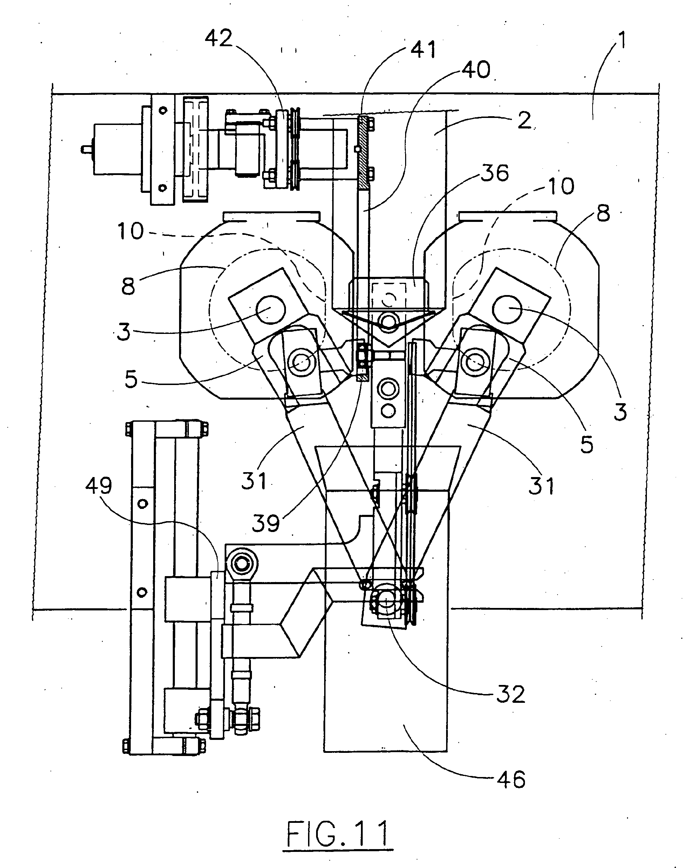

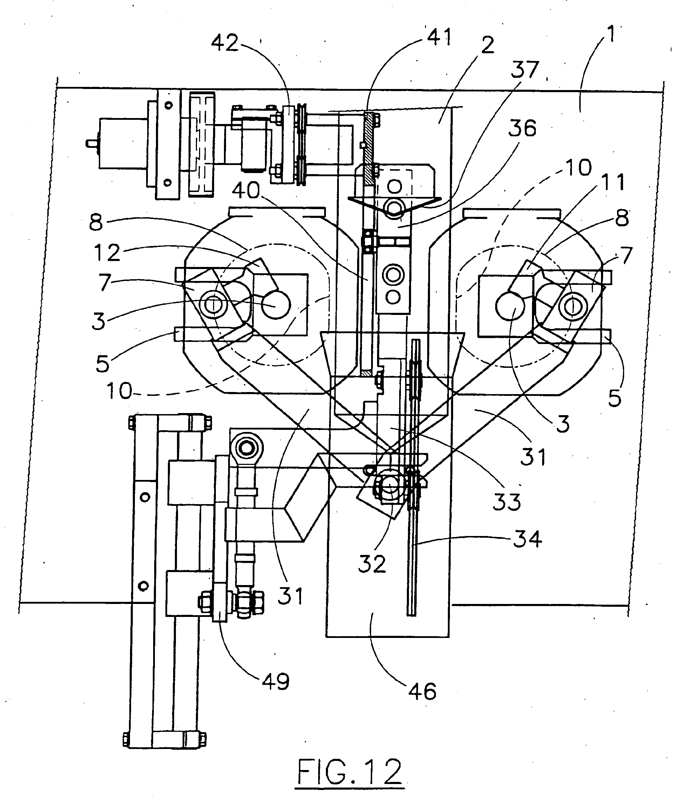

While the shafts 3 continue to rotate, the pincers 11 and 12 move away from each other, freeing both the already formed bag and the above tubular wrapping 2 with closed bottom, and the conveyor 26 lowers further until it reaches the lowest position (Figure 11), from which it rises successively while the pincers 11 and 12, continuing to rotate under the guide of the cams 9, first come near and then reach their position of maximum opening (Figure 12).

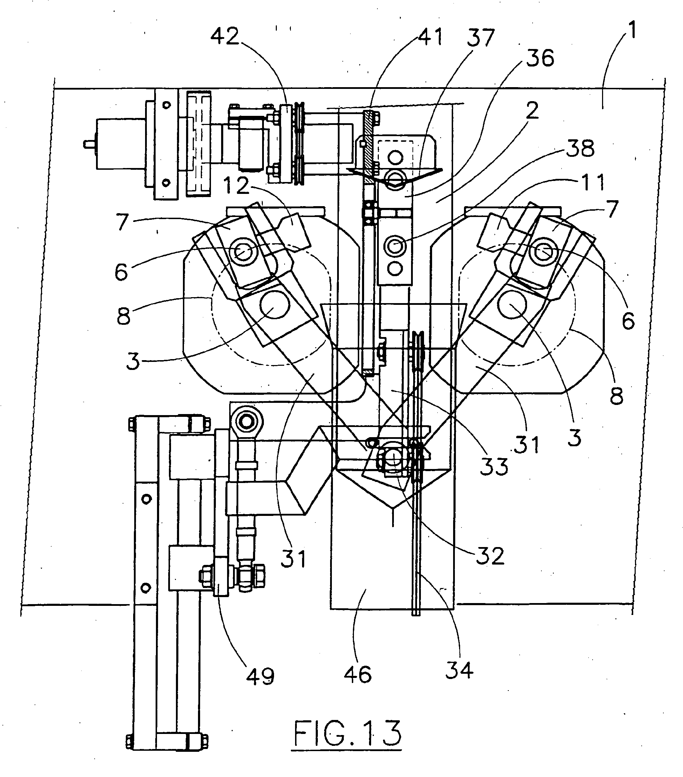

Further rotation of the shafts 3 makes the rotation of the pincers 11 and 12 continue, and they start to come closer to each other, while the conveyor 46 reaches the position of maximum raising (Figure 13), in which its upper mouth collects the lower end, previously sealed, of the tubular wrapping 2, which gradually descends.

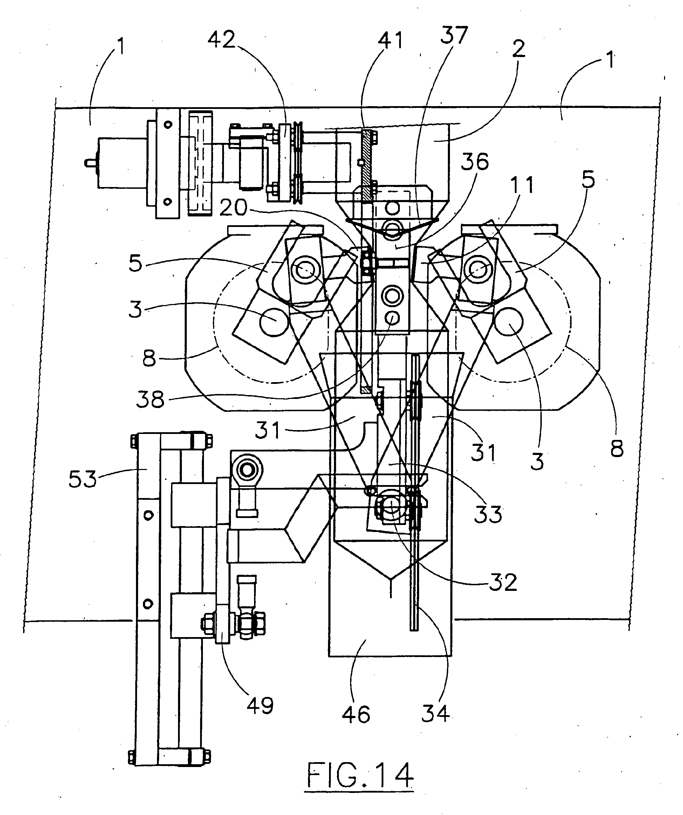

When the pincers 11 and 12 start to face each other (Figure 14), the pincers start to bring closer to each other the opposite flaps of a portion of the tubular wrapping 2 which is suitably distanced from the sealed bottom of the same tubular wrapping. The distance depends on the descent speed of the tubular wrapping.

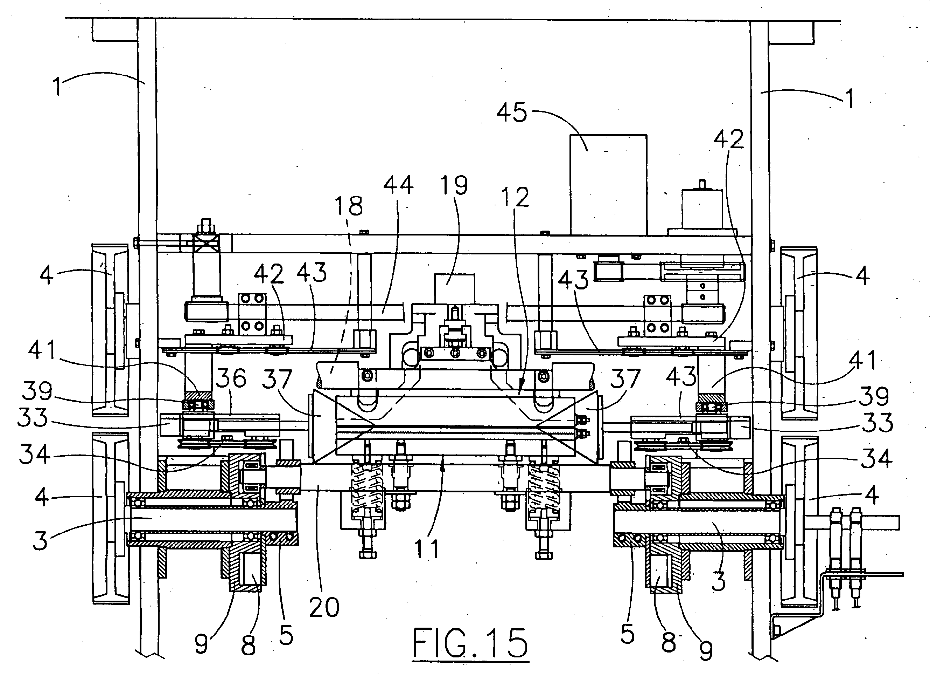

Before the two pincers come into contact, the motor 45 commands the translation of the trolleys 42 along the guides 43 so as to bring the lances 37 and 38 closer to each other (starting from the pause position of Fig. 15) and crate with them side pockets of the tubular wrapping 2 immediately above and below the sealing and cutting zone defined by the pincers 11 and 12 and by the blade 18.

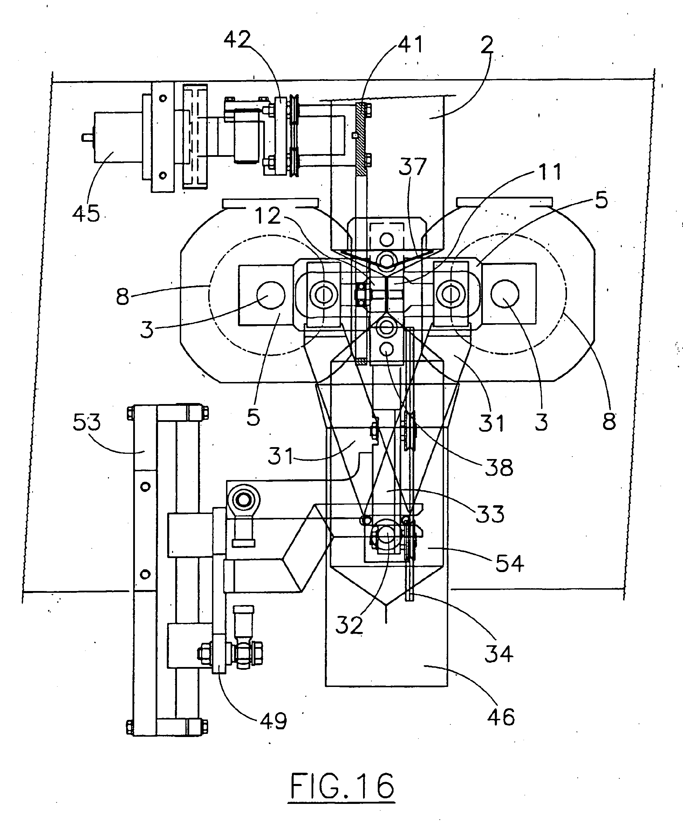

The pincers 11 and 12 then reach the maximum closing position of Figure 16 (with the lances 37 and 38 in closed position), where the pincers themselves carry out the sealing and cutting operations for completing the formation of a bag 54, which falls into the conveyor 46, which in the meantime has suitably risen in proximity of the sealing and cutting zone, and the simultaneous bottom sealing of the above tubular wrapping 2. During this operation, as has already been mentioned, the engagement of the ends 6 of the shafts 7 in the straight sections 10 of the tracks 8 of the cams 9 enables the pincers 11 and 12 to accompany the descent of the tubular wrapping 2, remaining suitably closed.

## Claims

1. Machine for packing small-sized products inside flat-bottomed bags, comprising
a pair of heat sealing pincers (11, 12) fitted with a cutting blade (18) and driven to carry out a path in which, starting from a raised and shifted position, the pincers (11, 12) are brought closer and engaged together to execute parallel horizontal lines of heat sealing of opposite flaps of a tubular wrapping (2) which is commanded to descend vertically, then they are moved vertically, while still in the close position and mutually engaged, for a section of the descent path of said tubular wrapping (2) to carry out a double transversal sealing and an intermediate cutting of the tubular wrapping (2), and finally they are brought back to said raised and shifted position,
two pairs of lances (37, 38) which, moving toward each other in a perpendicular direction to said descent path of the tubular wrapping (2) and to the path bringing the heat sealing pincers (11, 12) closer in synchronism with the movement of said heat sealing pincers (11, 12), provoke the formation of side pockets inside said wrapping (2) just above and below said heat sealing lines,
**characterised in that**
said pincers are rotatably driven by driving pulleys (4) to carry out a substantially D path, composed by a straight path (10) radiused to a curved path,
said lances (37, 38) are conveyed horizontally by trolleys (42) driven by a motor (45) in synchronism with the driving pulleys (4) of respective pincers (11, 12) so as to come closer together immediately before said pincers (11, 12) engage each other for the sealing and cutting of opposite flaps of the tubular wrapping (2),
said lances (37, 38) being also conveyed vertically with further trolleys (33) that follow the rise and descent movements of said pincers (11, 12) by rods (31) which converge in respective mutual hinging pins (32) secured to said further trolleys (33).

2. Machine according to claim 1, **characterised in that** each pincer (11, 12) comprises an upper portion (11', 12') and a lower portion (11", 12") separated by a groove (17) in which a cutting blade (18) can slide, said lower portions (11", 12") being provided with central interruptions (29, 30) such that while the upper portions (11', 12') perform sealings and complete closing of the bottom of the bag, the lower portions (11", 12") leave a central opening on the top of the bag which, in a successive phase of the packing operation, enables the vacuum inside the bag to be made before it is finally closed.

3. Machine according to any of claims 1-2, **characterised in that** it comprises a tubular conveyor (46) of cut bags (54), vertically mobile below said pincers (11, 12) in one with said trolleys (33).

## Patentansprüche

1. Maschine zum Verpacken von kleinformatigen Produkten in Beuteln mit flachem Boden, welche folgendes aufweist:
ein Paar von Heißsiegelungszangen (11, 12), welche mit einem Schneidmesser (18) ausgerüstet sind und derart angetrieben sind, dass sie ausgehend von einer angehobenen und verschobenen Position die Zangen (11, 12) einander angenähert und in Eingriff miteinander gebracht werden, um parallele horizontale Linien der Heißsiegelung der gegenüberliegenden Laschen einer rohrförmigen Umhüllung (2) zu erstellen, wobei die rohrförmige Umhüllung (2) derart gesteuert wird, dass sie in vertikaler Richtung eine Abwärtsbewegung ausführt, dann in vertikaler Richtung bewegt wird, während zugleich nach wie vor noch in der Schließposition und im wechselseitigen Eingriff auf einem Abschnitt des fallenden Weges der rohrförmigen Umhüllung (2) eine doppelte Querversiegelung vorgenommen und ein Durchtrennen an einer Zwischenschnittstelle der rohrförmigen Umhüllung (2) vorgenommen wird und schließlich die Zangen so bewegt werden, dass sie in die angehobene und verschobene Position zurückgebracht werden,
zwei Paare von Lanzen (37, 38), welche in vertikaler Richtung zu der abwärts gehenden Bahn der rohrförmigen Umhüllung (2) und dem Weg einander zu zu bewegen, um die Heißsiegelungszangen (11, 12) synchron mit der Bewegung der Heißsiegelungszangen (11, 12) einander anzunähern, wodurch die Bildung von Taschen im Inneren der Umhüllung (2) unmittelbar oberhalb und unterhalb der Heißsiegelungsnähte verursacht werden,
**dadurch gekennzeichnet, dass**
die Zangen durch Antriebsriemenscheiben (4) drehangetrieben sind, um einen im wesentlichen D-förmigen Weg zurückzulegen, welcher sich aus einem geraden Weg (10) mit einem Radius übergehend in einen gekrümmten Weg zusammensetzt, und
die Lanzen (37, 38) mit Hilfe von Schlitten (42) in horizontaler Richtung bewegt werden, welche von einem Rotor (45) synchron mit den Antriebsriemenscheiben (4) der zugeordneten Zangen (11, 12) derart angetrieben werden, dass sie sich einander annähern unmittelbar bevor die Zangen (11, 12) miteinander zusammen wirken, um die Laschen der rohrförmigen Umhüllung (2) jeweils dicht zu verschließen und die gegenüberliegenden Laschen durchzutrennen,
die Lanzen (37, 38) auch in vertikaler Richtung mit Hilfe von Schlitten (33) bewegt werden, welche den Auf- und Abbewegungen der Zangen (11, 12) durch Stangen (31) folgen, welche konvergierend in wechselweisen Anlenkstiften (32) verlaufen, welche fest mit weiteren Stiften (33) verbunden sind.

2. Maschine nach Anspruch 1, **dadurch gekennzeichnet, dass** jede Zange (11, 12) ein oberen Abschnitt (11', 12') und einen unteren Abschnitt (11", 12") aufweist, welche durch eine Ausnehmung (17) getrennt sind, in der ein Schneidmesser (8) eine Gleitbewegung ausführen kann, die unteren Abschnitte (11", 12") mit mittigen Unterbrechungen (29, 30) derart versehen sind, dass bei der Bildung einer Abdichtung an den oberen Abschnitten (11', 12') ein vollständiges Verschließen des Bodens des Beutels erfolgt, wobei die unteren Abschnitte (11", 12") eine Mittelöffnung auf der Oberseite des Beutels frei lassen, welche bei den anderen weiteren Verpackungsverfahrensschritten es ermöglichen, dass ein Vakuum im Innern des Beutels erzeugt wird, bevor dieser abschließend verschlossen wird.

3. Maschine nach einem der Ansprüche 1 bis 2, **dadurch gekennzeichnet, dass** sie einen rohrförmigen Förderer (46) für zugeschnittene Beutel (54) aufweist, welche in vertikaler Richtung unterhalb der Zangen (11, 12) mit einem der Schlitten (33) bewegbar ist.

## Revendications

1. Machine à emballer des articles de petite dimension dans des sacs à fond plat, comprenant :
une paire de pinces de scellage thermique (11, 12) équipées d'une lame de coupe (18) et entraînées de manière à parcourir un chemin dans lequel, en partant d'une position dans laquelle elles sont soulevées et écartées l'une de l'autre, les pinces (11, 12) sont amenées plus près l'une de l'autre et en prise l'une avec l'autre pour exécuter des lignes de scellage thermique horizontales parallèles sur des rabats, qui se font face, d'un emballage tubulaire (2) qui est commandé de manière à descendre verticalement, puis elles sont déplacées verticalement en restant en position serrée et en prise mutuelle sur une section du chemin de descente dudit emballage tubulaire (2) pour exécuter un double scellage transversal et une coupe intermédiaire de l'emballage tubulaire (2), et enfin elles sont ramenées à ladite position dans laquelle elles sont soulevées et écartées,
deux paires de lances (37, 38) qui en se déplaçant l'une vers l'autre dans une direction perpendiculaire audit chemin de descente de l'emballage tubulaire (2) et au chemin d'amenage des pinces de scellage thermique (11, 12) plus en synchronisme avec le déplacement desdites pinces de scellage thermique (11, 12), provoquent la formation de poches latérales à l'intérieur dudit emballage (2) juste au-dessus et juste au-dessous desdites lignes de scellage thermique,
**caractérisée en ce que**
lesdites lances sont entraînées en rotation par des poulies d'entraînement (4) pour exécuter un chemin substantiellement en forme de D, constitué d'un chemin droit (10) suivi d'un arrondi courbe,
lesdites lances (37, 38) sont transportées par des chariots (42) entraînés par un moteur (45) en synchronisme avec les poulies d'entraînement (4) des pinces (11, 12) respectives de manière à venir plus près l'une de l'autre immédiatement avant que lesdites pinces (11, 12) se mettent en prise l'une avec l'autre pour le scellage et la coupe de rabats, qui se font face, de l'emballage tubulaire (2),
lesdites lances (37, 38) étant également transportées verticalement au moyen d'autres chariots (33) qui suivent les mouvements de montée et de descente desdites pinces (11, 12) au moyen de tiges (31) qui convergent dans des axes d'articulation mutuelle respectifs (32) fixés auxdits autres chariots (33).

2. Machine selon la revendication 1, **caractérisée en ce que** chaque pince (11, 12) comprend une partie supérieure (11', 12') et une partie inférieure (11", 12") séparées par une rainure (17) dans laquelle peut glisser une lame de coupe (18), lesdites parties inférieures (11 ", 12") étant munies d'interruptions centrales (29, 30) de telle manière que pendant que les parties supérieures (11', 12') exécutent des scellages et achèvent la fermeture du fond du sac, les parties inférieures (11 ", 12") quittent une ouverture centrale située au sommet du sac qui, dans une phase suivante de l'opération d'emballage, permet de faire le vide à l'intérieur du sac afin qu'il soit finalement fermé.

3. Machine selon l'une quelconque des revendications 1 et 2, **caractérisée en ce qu'**elle comprend un convoyeur tubulaire (46) de sacs coupés (54) qui est mobile verticalement sous lesdites pinces (11, 12) en conjugaison avec lesdits chariots (33).
